Europäisches Patentamt

European Patent Office

Office européen des brevets

(19)

(11) Numéro de publication: **0 102 091**
**B1**

(12) **FASCICULE DE BREVET EUROPEEN**

(45) Date de publication du fascicule du brevet: **07.01.87**

(21) Numéro de dépôt: **83200597.9**

(22) Date de dépôt: **16.10.81**

(60) Numéro de publication de la demande initiale en application de l' article 76 CBE: **0 051 018**

(51) Int. Cl.⁴: **G 01 V 3/30**

(54) **Dispositif de diagraphie électromagnétique.**

(30) Priorité: **17.10.80 FR 8022327**

(43) Date de publication de la demande:
**07.03.84 Bulletin 84/10**

(45) Mention de la délivrance du brevet:
**07.01.87 Bulletin 87/02**

(84) Etats contractants désignés:
**DE GB IT NL**

(56) Documents cités:
**EP-A-0 035 421**
**FR-A-1 107 478**
**FR-A-2 241 795**
**FR-A-2 432 178**
**US-A-2 582 314**
**US-A-2 857 451**
**US-A-3 629 937**
**US-A-4 185 238**

(73) Titulaire: **SOCIETE DE PROSPECTION ELECTRIQUE SCHLUMBERGER**
**42, rue Saint-Dominique**
**F-75340 Paris Cedex 07 (FR)**
㊴ **IT**

(73) Titulaire: **Schlumberger Limited**
**277 Park Avenue**
**New York, N.Y. 10172 (US)**
㊴ **DE GB NL**

(72) Inventeur: **Thoraval, Yvon**
**7, square des Peupliers**
**F-92350 Le Plessis Robinson (FR)**

(74) Mandataire: **Hagel, Francis**
**Service Brevets ETUDES ET PRODUCTIONS SCHLUMBERGER B.P. 202**
**F-92142 Clamart Cedex (FR)**

Courier Press, Leamington Spa, England.

## Description

La présente invention concerne les dispositifs de diagraphie électromagnétique destinés à mesurer la conductivité électrique et/ou la constante diélectrique des formations géologiques traversées par un forage.

A cette catégorie appartiennent les mesures de conductivité électrique des formations traversées par un trou de forage par induction électromagnétique. Des formes de réalisation de procédés et d'outils de diagraphie par induction sont, par exemple, décrites dans le brevet Etats-Unis No. US—A—2 582 314 déposé par H. C. Doll. Une bobine émettrice montée sur une sonde est excitée par un oscillateur à une fréquence de l'ordre de 20 kHz, par exemple, pour induire des courants dans la formation géologique environnante. L'importance de ces courants dépend de la conductivité des formations dans lesquelles ils prennent naissance. Ils circulent selon des lignes sensiblement circulaires centrées sur l'axe du trou de forage et provoquent eux-mêmes l'apparition d'une force électromotrice dans une ou plusieurs bobines réceptrices montées sur la sonde de diagraphie à des distances déterminées de la bobine émettrice. L'analyse de paramètres du signal de sortie de ces bobines réceptrices par rapport au signal émis permet d'obtenir des informations sur la conductivité des formations traversées par ces courants.

Plus récemment, on a proposé (brevet US—A—4 185 238) des outils de mesure de certaines caractéristiques de milieux environnant un forage qui font intervenir la propagation d'énergie électromagnétique dans ces milieux à des fréquences sensiblement plus élevées que la fréquence utilisée pour réaliser les diagraphies à induction. Dans ces techniques, on emploie des radio-fréquences dans un domaine qui peut s'étendre d'une fréquence basse de 1 mégahertz environ jusqu'à un gigahertz environ. Les mesures effectuées permettent de déterminer à la fois la conductivité et la constante diélectrique des formations géologiques.

Il est admis depuis longtemps que dans les outils de diagraphie électromagnétique, l'enveloppe étanche en contact avec le fluide du forage doit être en un matériau non magnétique et non conducteur de l'électricité (brevet US—A—2 857 451; voir aussi FR—A—2432178 et la demande EP—A—0 035 421 publié le 9.9.81), ceci afin de ne pas perturber les mesures. Comme en même temps cette enveloppe doit résister à la pression du fluide du forage et aux forces qui s'exercent au cours du déplacement de l'outil dans le forage, sa réalisation a toujours été délicate.

De surcroît, dans le cas des dispositifs haute fréquence, l'enveloppe isolante forme, avec le tube métallique intérieur (supportant les antennes et servant au passage des conducteurs) et avec le fluide de forage conducteur, une structure analogue à un câble coaxial, qui permet au mode parasite transversal TEM de se propager pratiquement sans pertes de l'émetteur au(x) récepteur(s). Comme les signaux parasites résultants ont la même fréquence et la même phase que les signaux utiles, l'extraction de ces derniers constitue un problème extrêmement difficile.

Le problème consiste à concevoir un dispositif de diagraphie électromagnétique qui ne présente pas les inconvénients évoqués ci-dessus.

Ce problème est résolu avec le dispositif selon la revendication 1.

D'autres aspects et avantages de l'invention apparaîtront à la lecture de la description suivante donnée à titre d'exemple, en référence aux dessins annexés, dans lesquels:

la figure 1 représente une sonde de diagraphie équipée d'antennes sur mandrin selon une forme de réalisation de l'invention;

la figure 2a est une variante de réalisation de la figure 1;

la figure 2b est une vue agrandie d'un détail de la figure 2a coupé par un plan diamétral longitudinal.

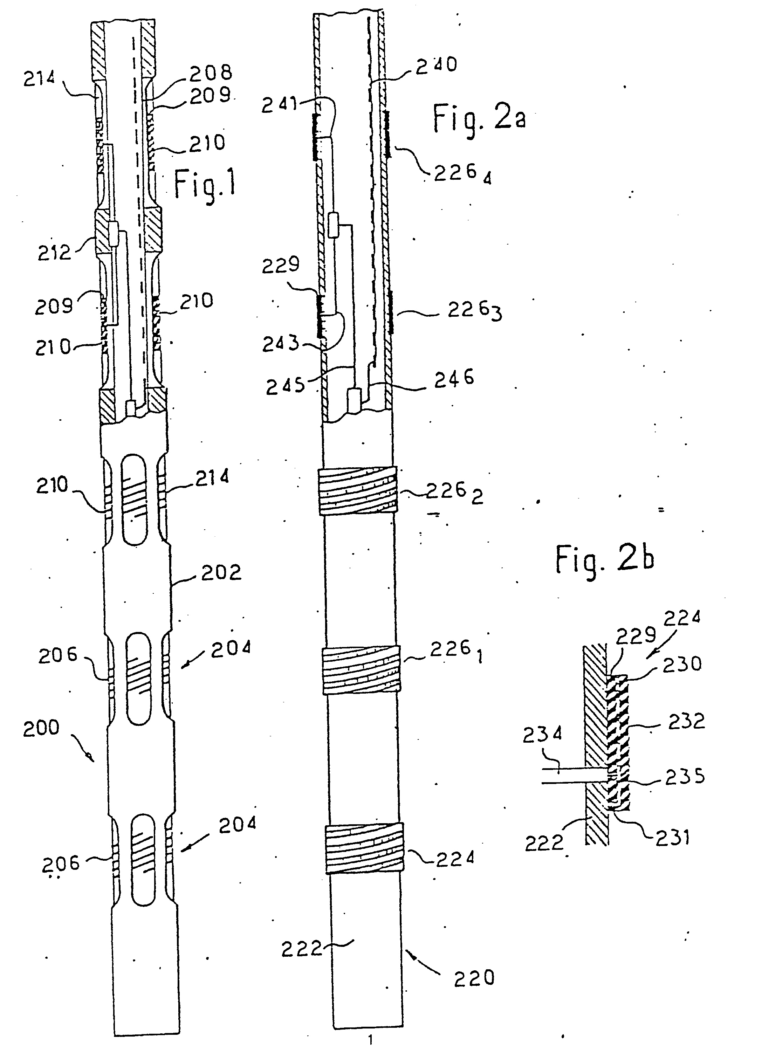

Selon une forme de réalisation, une sonde 200 (figure 1) comporte un mandrin cylindrique entouré d'une enveloppe externe métallique, Autour de cette enveloppe sont disposées, en plusieurs emplacements longitudinalement espacés 204, des antennes biplaques 206 du type à enroulement, c'est à dire des dipoles magnétiques, décrit dans la demande principale EP—A—0 051 018, figure 6. Comme le représente la partie supérieure de la figure 1 qui montre la sonde partiellement coupée par un plan diamétral longitudinal, l'enveloppe externe métallique 202 présente, en chaque emplacement 204, une partie 208 de diamètre externe rétréci qui constitue par elle-même un élément cylindrique de masse pour chaque antenne 206. Chacune de ces parties rétrécies 208 est revêtue d'un manchon diélectrique 209 autour duquel est enroulée une lame de métal en hélice 210 dont une extrémité est mise en court-circuit avec la partie métallique rétrécie 208 de l'enveloppe conductcice 202. L'épaisseur combinée du diélectrique 209 et de l'enroulement 210 est telle que le diamètre de l'ensemble soit inférieur au diamètre de l'enveloppe 202 dans les parties 212 qui séparent les emplacements 204. Ces portions 212 sont réliées entre elles par une série de barreaux 214 de direction longitudinale passant par dessus chaque enroulement 210 qui forment ainsi une cage à barreaux parallèles autour des antennes 206 dans un but de protection mécanique. Les barreaux longitudinaux 214 font corps avec l'enveloppe 202. Dans cette réalisation, l'élément cylindrique de masse des antennes se trouve en contact électrique direct avec la boue 202. Aucune propagation en mode TEM ne peut avoir lieu en l'absence d'une structure du type coaxial avec diélectrique entre un conducteur interne et la colonne de boue entourant l'outil.

Selon une autre forme de réalisation (figure 2a), l'enveloppe d'une sonde 220 est constituée par un tube métallique cylindrique 222 s'étendant sur toute la hauteur de l'outil. Autour de l'enveloppe 222 sont montées, dans des positions longitudinalement espacées, une antenne émettrice 224 à la partie inférieure de l'outil et une série d'antennes réceptrices $226_1$, $226_2$, $226_3$ et $226_4$. Chacune des antennes 224; $226_1$ à $226_4$ comprend un revêtement diélectrique 229 accolé directement autour de la surface externe de l'enveloppe 222, laquelle forme un élément cylindrique de masse commun à toutes ces antennes. Autour de chaque manchon diélectrique 229 (figure 2b) est enroulée en hélice une bande métallique radiante 230 raccordée électriquement à l'enveloppe 222 à une de ses extrémités 231. L'enroulement 230 est noyé dans un revêtement isolant 232 à base de fibre de verre qui lui procure une protection à la fois mécanique contre les chocs et l'abrasion dus au mouvement de l'outil à l'intérieur du forage et chimique contre la corrosion.

Un câble coaxial 234 d'alimentation de l'antenne 224 passe à travers l'enveloppe 222. Sa gaine est connectée électriquement à cette enveloppe. L'âme 235 est connectée comme précédemment décrit pour réaliser l'adaptation d'impédance.

Si la protection offerte par le revêtement 232 est efficace d'un point de vue mécanique et chimique, elle n'est pas indispensable d'un point de vue électrique. Aucune propagation en mode TEM n'est à redouter.

L'électronique interne nécessaire au fonctionnement des outils est logée (parties coupées des figures 1 et 2a) dans l'espace interne délimité par les tubes conducteurs 202 et 222 à leur partie supérieure. Des supports 240 montent des cartes électroniques de traitement propres à être reliées à des couples de récepteurs $226_1$, $226_2$ et $226_3$, $226_4$ par l'intermédiaire de câbles coaxiaux 241, 243, 245 et 246.

La constitution des circuits électroniques et des liaisons appropriées pour alimenter l'émetteur 224 et pour permettre le traitement des signaux issues des récepteurs $226_1$ à $226_4$, est bien connue et, par exemple, décrite dans le Brevet Etats-Unis précité US—A—4 185 238 du 22 janvier 1980 délivré à Messieurs Huchital et Tabanou.

Ainsi, on a réalisé une sonde de diagraphie par propagation d'ondes électromagnétiques comportant une enveloppe métallique qui présente, outre la suppression de la propagation d'ondes en mode TEM, un certain nombre d'avantages pour la réalisation des outils, tant sur le plan de la robustesse que de la facilité de montage et par conséquent du coût de fabrication. Ils peuvent permettre notamment de minimiser ou de prendre en compte les variations d'écartement des bobines le long des mandrins sous l'effet de la dilatation thermique.

## Revendications

1. Dispositif de diagraphie électromagnétique destiné à mesurer la conductivité et/ou la constante diélectrique des formations géologiques traversées par un forage, comprenant un dipole magnétique émetteur d'énergie électromagnétique (206; 224) et au moins un dipole magnétique récepteur d'énergie électromagnétique (206; 226) placés sur un support tubulaire allongé (202; 222) en étant écartés axialement l'un de l'autre, caractérisé par le fait que le support tubulaire (202; 222) est en métal conducteur et constitue, entre les dits dipoles magnétiques (206; 224, 226), l'enveloppe externe du dispositif.

2. Dispositif selon la revendication 1, caractérisé par le fait que le dit support (202) présente à l'emplacement des dits dipoles magnétiques (206) un diamètre extérieur rétréci.

## Patentansprüche

1. Elektromagnetisches Diagraphiegerät, bestimmt zum Messen der Leitfähigkeit und/oder der Dielektrizitätskonstante von bohrlochdurchteuften geologischen Formationen, umfassend einen magnetischen Dipol- Sender (206; 224) elektromagnetischer Energie und mindestens einen magnetischen Dipol-Empfänger (206, 226) elektromagnetischer Energie, die auf einem langgestreckten Rohrträger (202; 222) im Axialabstand voneinander positioniert sind, dadurch gekennzeichnet, daß der Rohrträger (202; 222) aus leitendem Metall besteht und zwischen den genannten magnetischen Dipolen (206; 224, 226) die Außenhülle des Geräts bildet.

2. Gerät nach Anspruch 1, dadurch gekennzeichnet, daß der genannte Träger (202) am Ort der genannten magnetischen Dipole (206) einen eingeschnürten Außendurchmesser aufweist.

## Claims

1. An electromagnetic logging apparatus for measuring the conductivity and/or the dielectric constant of geological formations traversed by a borehole comprising a magnetic dipole (206, 224) for transmitting electromagnetic energy and at least one magnetic dipole (206, 226) for receiving electromagnetic energy mounted on an elongate tubular support (202, 222) in an axially spaced relationship from each other, characterized in that said tubular support (202, 222) is made of conductive metal and constitutes, between said magnetic dipoles (206, 224, 226), the external housing of the apparatus.

2. Apparatus according to claim 1, characterized in that said support (202) presents at the locations of said magnetic dipoles (206) a recessed outer diameter.

Fig.1

Fig. 2a

Fig. 2b